# EUROPEAN PATENT APPLICATION

(11) **EP 4 756 188 A1**
(43) Date of publication of application: **10.06.2026**
(21) Application number: 25213538.9
(22) Date of filing: 05.11.2025
(51) Int. Cl.: F01D 25/28, G01N 21/954, G01N 29/22, G01N 29/265

(54) **METHOD AND DEVICE FOR INSPECTING A COMPONENT OF A GAS TURBINE ENGINE**

(30) Priority: 05.12.2024 GB 202417844; 18.02.2025 GB 202502346
(71) Applicant: Rolls-Royce plc, London N1 9FX (GB)
(72) Inventor: Ma, Ho Yin, Derby, DE24 8BJ (GB); Barton, David, Derby, DE24 8BJ (GB); Zubair, Aleena, Derby, DE24 8BJ (GB); Steele, Dylan, Derby, DE24 8BJ (GB); White, Callum, Derby, DE24 8BJ (GB)
(74) Representative: Rolls-Royce plc

(57) **Abstract**

A method of inspecting a component of a gas turbine engine for an aircraft, in which a housing circumferentially surrounds the component so as to define an annular space between the housing and the component. The method comprises guiding a guide line into the annular space through an opening to the annular space and around the component in a circumferential direction, and withdrawing the guide line through the opening, such withdrawal moving a probe that is connected to the guide line in a circumferential direction around the component for performing an inspection of the compressor.

## Description

### FIELD

This disclosure relates to a method of inspecting a component of a machine, such as a component (e.g. compressor) of a gas turbine engine for an aircraft.

### BACKGROUND

Many machines require ongoing maintenance. Such maintenance can include an inspection of a machine (or a part of a machine, such as a component of the machine) to identify issues that require rectification. In complex machinery it can sometimes be difficult to inspect components that are internal to the machinery, because it can be problematic gaining direct access to such components to perform an inspection.

One example of such an internal component (where access to the component can be problematic) is a compressor of a gas turbine engine for an aircraft. For example, it can be desirable to inspect the liners (on an internal wall) of such a compressor, but in some aircraft gas turbine engines, the high pressure compressor is housed within a housing with few or no openings allowing access to the compressor to perform an inspection. In such circumstances, on-wing inspection of the compressor is typically not possible.

One option to inspect such a compressor is, instead, to remove the gas turbine engine from the aircraft to perform an off-wing inspection. This requires significant disassembly and takes significant time, which means it can be more cost effective to simply replace the liner of such a compressor rather than inspect the liner. This means that liners may be replaced prior to the end of their useful life, which results in unnecessary cost and can be unfavourable with respect to sustainable practice.

Moreover, the inability to inspect parts (such as liners) of such compressors can be detrimental to effective maintenance and operations planning. This can be especially disruptive with respect to mitigation of in (e.g. remote) locations that lack maintenance facilities.

### SUMMARY

In a first aspect, there is provided a method of inspecting a component of a gas turbine engine (e.g. for an aircraft), in which a housing circumferentially surrounds the component so as to define an annular space between the housing and the component the method comprising:
guiding a guide line into the annular space through an opening to the annular space and around the component in a circumferential direction (e.g. so as to encircle the component); and
withdrawing the guide line through the opening, such withdrawal moving a probe that is connected to the guide line in a circumferential direction around the component for performing an inspection of the component.

The method of the first aspect may allow for on-wing inspection of the component of the gas turbine engine.

The use of a guide line to move the probe around the component can help to ensure that the probe remains on a desired path as it is moved around the component, which may help to provide alignment between the probe and inspection locations on the component. Moreover, moving the probe via withdrawal of the guide line (for example, as opposed to pushing the probe) may provide more control of the movement of the probe around the component.

In an embodiment, the method may comprise moving a borescope into the annular space through the opening and around the component in a first circumferential direction (e.g. prior to guiding the guide line into the annular space). The borescope may comprise a borescope cable and a borescope head. The borescope cable may be an electrical cable (e.g. may be configured for power supply and/or data transfer to/from the borescope). The movement of the borescope around the component may be such that the borescope cable encircles (completely or almost completely) the component. The movement of the borescope may be such that the borescope returns to the opening (or a region of the annular space proximate to the opening) after travelling the circumference of the component.

In an embodiment, the method may comprise moving the borescope in a second circumferential direction, opposite to the first circumferential direction. The movement in the second circumferential direction may be to guide a pull line, connected to the borescope, around the component. For example, the borescope (e.g. the borescope cable) may be withdrawn at least partly through the opening. The borescope may be moved in the second circumferential direction (e.g. withdrawn through the opening) by pulling the borescope cable of the borescope through the opening.

In an embodiment, the method may comprise connecting the pull line to the borescope subsequent to moving the borescope around the component. The pull line may be attached directly or indirectly to the borescope. For example, the pull line may be attached directly to a borescope guide (discussed further below) to which the borescope may be mounted. The pull line may be connected to the borescope so as to extend from the borescope in an opposite direction to the borescope cable.

In an embodiment, the pull line may be the guide line. Accordingly, the guiding of the guide line around the component may be provided by moving the borescope around the component (e.g. by withdrawal of the borescope through the opening).

In an alternative embodiment, the pull line may be provided in addition to the guide line. In such an embodiment, the pull line may be used to guide the guide line around the component (for example, by withdrawal of the pull line through the opening, which may be performed by pulling the pull line).

In another alternative embodiment, the guide line may be the borescope cable of the borescope. The borescope cable (i.e. guide line) may be guided into the annular space through the opening and around the component by the movement of the borescope into the annular space through the opening and around the component. As may be appreciated, in such an embodiment, the probe may be connected to the borescope (e.g. directly). This may avoid the need to provide any further guide line and/or pull line.

In an embodiment, the borescope (e.g. the head of the borescope) may be mounted to a borescope guide. Mounting of the borescope to the borescope guide may be performed outside of the annular space, or may be performed in a region of the annular space adjacent to the opening. The borescope guide may be as described below with respect to the second aspect.

In an embodiment, the borescope may be mounted to the borescope guide subsequent to moving the borescope around the component in the first circumferential direction. Accordingly, movement of the borescope around the component in the first circumferential direction may be performed without the borescope guide (i.e. without the borescope being mounted to the borescope guide). After moving the borescope around the component in the first circumferential direction, the borescope (e.g. the head of the borescope) may be removed from the annular space through the opening for mounting to the borescope guide. Alternatively, depending on the nature of the opening, the borescope (e.g. the head to the borescope) may be mounted to the borescope guide while remaining in the annular space (albeit at region adjacent to the opening).

In an embodiment, the borescope guide may comprise one or more magnetic elements for retaining the borescope guide to the component. The one or more magnetic elements (i.e. collectively) may be configured to permit sliding of the borescope guide over an outer surface of the component, while retaining the borescope guide on the component surface. The one or more magnetic elements may be permanent magnets or may, for example, be electromagnets (which may provide control over the attachment of the borescope guide to the component).

In an embodiment, the method may comprise guiding a tube (e.g. a flexible tube) around the component prior to moving the borescope around the component in the first circumferential direction. The borescope may be moved within the tube in the first circumferential direction. In other words, the tube may be used to guide the borescope (which may be without the borescope guide) around the component. The tube may be guided around the full circumference of the component, or around only part of the circumference.

In an embodiment, the method may comprise connecting the probe to the guide line subsequent to guiding the guide line around the component (in other embodiment the guide line may already be (e.g. permanently) connected to the probe). The probe may be connected to an opposite end of the guide line to which the borescope is (or was previously) connected. The guide line may be attached directly or indirectly to the probe. For example, the guide line may be attached directly to a probe guide to which the probe may be mounted. The probe guide may be as described with respect to the second aspect. Connecting the probe to the guide line may be performed outside of the annular space. Alternatively, connecting the probe to the guide line may be performed within the annular space, for example, in a region adjacent to the opening (so as to be accessible from outside of the annular space).

In an embodiment, the method may comprise positioning a line directing member through the opening so as to extend at least partway across the annular space towards the component. The guide line may pass over a distal end of the line directing member, distal from the opening, when the guide line is withdrawn through the opening. Accordingly, the line directing member may be arranged to ensure that the guide line follows a path that extends along the outer surface of the component (in the circumferential direction) and then turns (e.g. sharply) adjacent to the opening.

In an embodiment, the line directing member may be a tube. The line directing member may be flexible. For example, the line directing member may be a flexible tube.

In an embodiment, the component may be a compressor of the gas turbine engine. The compressor may be a high pressure compressor of the gas turbine engine. The annular space may be defined between a casing of the compressor and the housing.

In an embodiment, the component (e.g. compressor) may comprise one or more radial flanges. For example, the component may comprise two radial flanges that are axially spaced (e.g. the axial direction being parallel to a rotational axis of the component). The two radial flanges may define a recess therebetween. The flanges may extend for the full circumference of the component. The method may comprise positioning at least the probe in the recess while the probe is moved around the component. The method may comprise positioning one or more of (or each of) the borescope, borescope guide, guide line, probe, or probe guide in the recess (for moving around the component). In this way, for example, the guide line may be laid around the component within the recess, and the guide line may then be used to pull the probe (and/or probe guide) around the component along the recess.

In an embodiment, the method may comprise removing a bleed valve of the gas turbine engine to access the opening to the annular space. The method may comprise reassembling the bleed valve on the gas turbine engine after performing the inspection with the probe.

In an embodiment (e.g. alternatively or additionally to removing a bleed valve), the method may comprise removing pipework (e.g. of a bleed air system, such as a cabin bleed system) to access the opening to the annular space.

In an embodiment, the probe may be an ultrasonic probe. Performing the inspection may comprise performing an ultrasonic inspection of the component. Performing the inspection may comprise inspecting a liner of the component (e.g. compressor).

The above method of the first aspect is described in the context of inspecting a gas turbine engine (e.g. for an aircraft). In other aspects, the same (or a similar) method may be used to inspect a component of another machine (albeit one that is also surrounded by an annular space with an opening to that space).

In a second aspect, there is provided a guide for guiding an inspection device (e.g. a probe or borescope) around an outer circumferential surface of a component (e.g. compressor) of a gas turbine engine (e.g. for an aircraft), the guide comprising a mounting portion for mounting the inspection device to the guide, and one or more magnetic elements for retaining the guide on the outer circumferential surface in use.

The provision of a guide having magnetic elements (e.g. permanent magnets or electromagnets) may ensure the inspection device remains on the outer circumferential surface of the component. This may ensure that the guide (and thus the inspection device) follows a circumferential path as it is moved around the component.

In an embodiment, the guide may comprise an underside, which may be arranged to face radially inward in use. The guide may comprise an upper side opposite the underside (which may face radially outwardly in use). The guide may comprise ends or end portions spaced in the in-use circumferential direction. The guide may comprise opposite first and second lateral sides, which may face axially in use (for example, along a central axis of the component). The guide may be elongate.

In an embodiment, the underside of the guide may be concave to slide across the outer circumferential surface of the component. The underside may be elongate. The one or more magnetic elements may be provided in or proximate to the underside of the guide.

In an embodiment, the guide may comprise a lateral protrusion that protrudes laterally from the first lateral side of the guide. The lateral direction may be perpendicular to a direction of elongation of the body. The lateral protrusion may be a first lateral protrusion and the guide may comprise a second lateral protrusion spaced along the guide from the first lateral protrusion. The guide may comprise more than two lateral protrusions (e.g. three, four, or five lateral protrusions) space along the guide.

In an embodiment, the or each lateral protrusion may be tapered in a direction of extension of the lateral protrusion. The or each lateral protrusion may comprise a sloped lower surface (e.g. sloped relative to the underside of the guide).

In an embodiment, the guide may comprise one or more lateral protrusions extending laterally from the second lateral side of the guide.

In an embodiment the guide may comprise a cable retaining portion for retaining a cable of the inspection device against the guide. The cable retaining portion may be spaced along the guide from the mounting portion. The cable retaining portion may be on the upper side of the guide. The cable retaining portion may comprise a hole through which the cable of the inspection device may extend in use. The hole may be arranged such that a central axis of the hole extends in a circumferential direction in use (i.e. when the underside of the guide is on the outer circumferential surface of the component). Accordingly, the hole may be configured to direct the cable circumferentially in use.

In an embodiment, the guide may be configured for guiding a borescope around the component. The mounting portion, for example, may be configured for mounting a borescope thereto. The mounting portion may comprise a cavity for receipt of a borescope (e.g. the cavity may be open at one end). The mounting portion may be cylindrical. The guide may be provided with an aperture at an end of the cavity (e.g. for visual access beyond the cavity by a borescope mounted therein).

In an embodiment, the guide may be configured for guiding a probe (e.g. an ultrasound probe) around the component. The mounting portion may, for example, be configured for mounting a probe thereto.

In an embodiment, at least the underside of the guide may be deformable (e.g. to allow the guide to be used on components of different shape, such as different radii).

In an embodiment, the underside of the guide may form part of a replaceable member that is releasably mounted to a body of the guide. In this way, the replaceable member (and thus the underside) may be exchanged for another replaceable member of a different shape to allow the guide to be used with a component of a different shape.

In a third aspect, there is provided a kit of parts comprising a guide according to the second aspect and a component (e.g. a compressor, such as a high pressure compressor) of a gas turbine engine. The component may comprise a circumferentially extending recess. The recess may be defined between two spaced apart (radially projecting) flanges. The guide may be configured to fit closely (or snugly) within the recess. For example, a maximum width of the guide may be substantially the same as a minimum width of the recess (width being taken in a direction across the recess).

### BRIEF DESCRIPTION OF THE DRAWINGS

Embodiments will now be described by way of example only with reference to the accompanying drawings, in which:
**FIG. 1A** is a schematic section view showing a first step in a method of inspecting a component of a gas turbine engine;
**FIG. 1B** is a schematic section view showing a second step in the method of inspecting a component of a gas turbine engine;
**FIG. 1C** is a schematic section view showing a third step in the method of inspecting a component of a gas turbine engine;
**FIG. 1D** is a schematic section view showing a fourth step in the method of inspecting a component of a gas turbine engine;
**FIG. 1E** is a schematic section view showing a fifth step in the method of inspecting a component of a gas turbine engine;
**FIG. 1F** is a schematic section view showing a sixth step in the method of inspecting a component of a gas turbine engine;
**FIG. 1G** is a schematic section view showing a seventh step in the method of inspecting a component of a gas turbine engine;
**FIG. 2** is a schematic section view showing a variation of the method illustrated by FIG. 1A to 1G;
**FIG. 3A** is an upper perspective view showing a probe assembly for use in the method illustrated by FIG. 1A to 1G;
**FIG. 3B** is a lower perspective view showing the probe assembly of FIG. 3B;
**FIG. 4A** is an upper perspective view showing a borescope guide for use in the method illustrated by FIG. 1A to 1G;
**FIG. 4B** is a lower perspective view showing the probe assembly of FIG. 4A; and
**FIG. 4C** is a section perspective view of the borescope guide shown in FIG. 4A.

### DETAILED DESCRIPTION

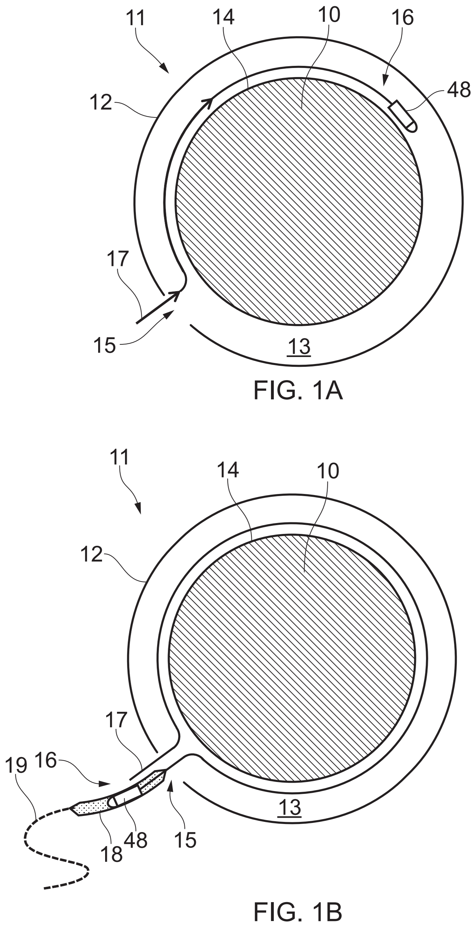

**Figures 1A to 1G** illustrate a method of inspecting a component 10 of a gas turbine engine 11, in which a housing 12 circumferentially surrounds the component 10 so as to define an annular space 13 between the housing 12 and a casing 14 of the component 10. Each of these figures is a (schematic-style) section view taken in a plane that is perpendicular to a rotational axis of the gas turbine engine 11.

The illustrated example is a method of inspecting the liner of a high pressure compressor (the component 10) of a gas turbine engine 11 for an aircraft . In particular, in the illustrated example, the inspection is to detect delamination between the material of the liner and the underlying material of the casing 14 of the component 10 (the presence of such delamination may be more readily detected from outside the casing 14 using e.g. ultrasound than, for example, by visual inspection of the internal gas-washed surface of the liner). The inspection may alternatively or additionally detect the formation of cracks beneath the gas-washed surface of the material of the liner.

The gas turbine engine 11 may, for example, be a Rolls-Royce Trent 700. As may be appreciated, the method may be used to inspect a component other than a compressor of an aircraft gas turbine engine. For example, the method may be used to inspect other components of an aircraft gas turbine engine, used to inspect a component of a non-aircraft gas turbine engine, or used to inspect other components surrounded by an annular space but otherwise having limited accessibility.

As shown in the figures, the housing 12 includes an opening 15, through which access into the annular space 13 is provided. In the illustrated example (in which the inspected component 10 is a compressor), this region of the gas turbine engine 11 is accessed by first opening a C-duct pivot door of the gas turbine engine 11. The opening 15 can then be formed by disconnecting a component from the gas turbine engine 11. For example, in some aircraft gas turbine engines (such as the Rolls-Royce Trent 700), the opening 15 can be formed by temporary removal of a bleed check valve, for example, a bleed check valve of the intermediate pressure (IP) compressor of the gas turbine engine.

Referring firstly to **FIG. 1A****,** once the opening 15 to the annular space 13 has been provided, a borescope 16 is guided into the annular space 13 through the opening 15. The borescope 16 is then guided through the annular space 13 in a circumferential direction around the component 10. The borescope 16 includes a borescope head 48 and a borescope cable 17, which can be connected to an external device (not shown) so that a user can view a live video feed captured by a camera of the borescope 16 (within the borescope head 48). In another example the borescope may be of the type having an external camera (e.g. the borescope head 48 may contain optics, such as a lens system, and optical fibres in the borescope cable 17 may connect the external camera to the optics).

The ability to obtain visual information via the borescope 16 can help a user manoeuvre through the annular space 13 and navigate any obstacles present in the annular space 13. To further aid in manoeuvring of the borescope 16 through the annular space 13, the borescope head 48 may be articulatable, which may be controlled, for example, by a signal communicated via the borescope cable 17.

The borescope cable 17 is also used to move the borescope 16 around the component 10, by feeding the borescope cable 17 into the opening 15 to push the borescope 16 further into the annular space 13. As may be appreciated, though, in other examples the electrical connection of the borescope 16 and the means for moving the borescope 16 through the annular space 13 can be separate elements (e.g. two separate cables).

In another example, not illustrated, the borescope 16 may be guided around the component 10 within a flexible tube that extends around the component 10. The flexible tube may, for example, be guided around the component 10 (in the annular space) prior to guiding the borescope 16 into the annular space.

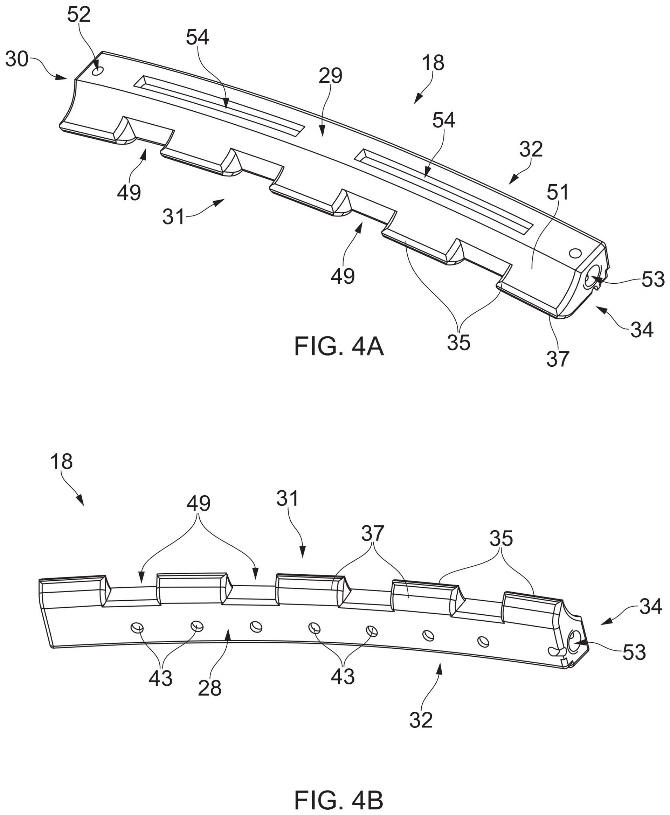

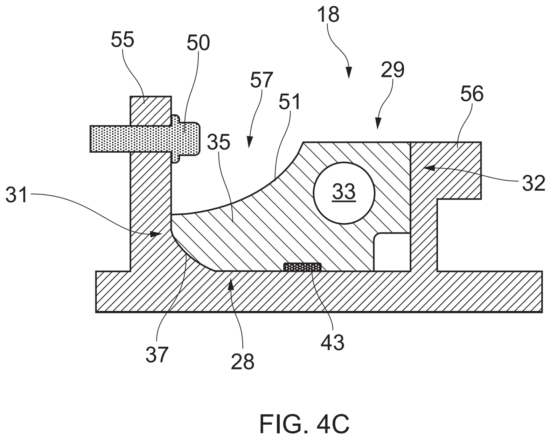

As is apparent from **FIG. 1B****,** the borescope 16 is moved in a circumferential direction around the full circumference of the component 10 such that the borescope 16 is returned to the opening 15 (or proximate to the opening 15) and the borescope cable 17 completely (or almost completely) encircles the component 10. The borescope head 48 of the borescope 16 is then removed from the annular space 13 through the opening 15 and is mounted to a borescope guide 18. As will be explained, the borescope guide 18 aids in further movement of the borescope 16 around the component 10. An exemplary borescope guide 18 is illustrated in **FIG. 4A, FIG. 4B** and **FIG. 4C** and is described further below in relation to those figures.

In other examples, the borescope head 48 may be mounted to the borescope guide 18 prior to the initial insertion into the annular space 13 so as to be guided around the component 10 (i.e. the first passage of the borescope 16 around the component 10) while mounted to the borescope guide 18, or the borescope guide 18 may be omitted completely.

The borescope 16 is also, at this point, connected to a guide line 19 (or pull line) via the borescope guide 18 (i.e. the guide line 19 is attached to the borescope guide 18, to which the borescope 16 is mounted). In other examples, the connection of the guide line 19 may occur prior to the initial passage of the borescope 16 around the component 10 (with or without the presence of the borescope guide 18). In such examples, the guide line 19 would be pulled around the component 10 with the borescope 16 and could then be pulled through the opening 15 to be in the position shown in FIG. 1B. The guide line 19 may be formed of e.g. string, cabling, wire rope, etc.

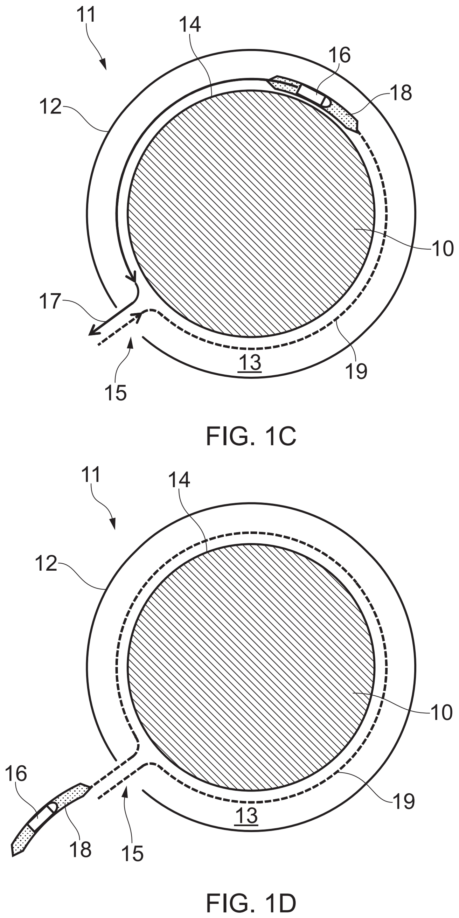

In the illustrated example method, subsequent to the guide line 19 being attached, the borescope 16 (mounted to the borescope guide 18) is inserted back into the annular space 13 through the opening 15 (as shown in **FIG. 1C**). The borescope guide 18 may be positioned on the casing 14 of the component 10 between two spaced flanges (not shown) of the casing 14. This may help to guide the borescope guide 18 (and thus the borescope 16) around the component 10.

The borescope 16 is then moved in a circumferential direction around the component 10, which is an opposite circumferential direction to the initial passage of the borescope 16 around the component 10 described above. This is achieved by withdrawing the borescope cable 17 through the opening 15 to pull the borescope 16 (including the borescope head 48) through the annular space 13 and around the component 10.

When moved in this manner, the borescope 16 pulls (via the borescope guide 18) the guide line 19 into the annular space 13 and around the component 10. The use of the borescope guide 18 for this movement can help to ensure that the borescope 16 remains on or proximate to the casing 14 of the component 10. This helps to ensure that the guide line 19 is also pulled along a path in a reliable manner so as to remain close to the casing 14 and so as not to significantly deviate from a region of the component 10 that is to be inspected (for example the guide line 19 may remain between the two spaced flanges of the casing 14 referred to above). Visual information (such as video feed or images) provided by the borescope 16 may be used to monitor the positioning of the guide line 19 as it is drawn around the component 10 (such that any issues with the positioning of the guide line 19 can be corrected if necessary).

The borescope cable 17 is pulled to move the borescope 16 fully around the component 10 so that the borescope cable 17 and the borescope 16 can be withdrawn from the annular space 13 through the opening 15 (shown in **FIG. 1D**) and can be detached from the guide line 19. This movement of the borescope 16 draws the guide line 19 circumferentially around the component 10 so as to completely (or almost completely) encircle the component 10.

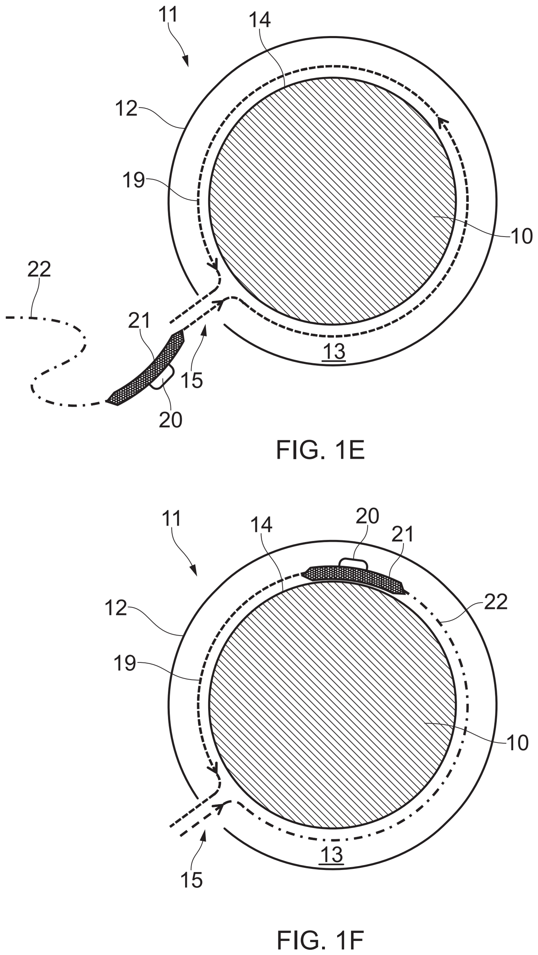

Once the guide line 19 is laid around the component 10, as shown in **FIG. 1E****,** a probe 20 (having a probe cable 22 that is connectable to an external device such as an ultrasound reader) is connected to an end of the guide line 19 extending out of the annular space 13 through the opening 15. As may be appreciated, the probe 20 may be connected to either end of the guide line 19 extending from the opening 15 (at least in examples in which the borescope 16 is detached from the guide line 19 prior to attachment of the probe 20).

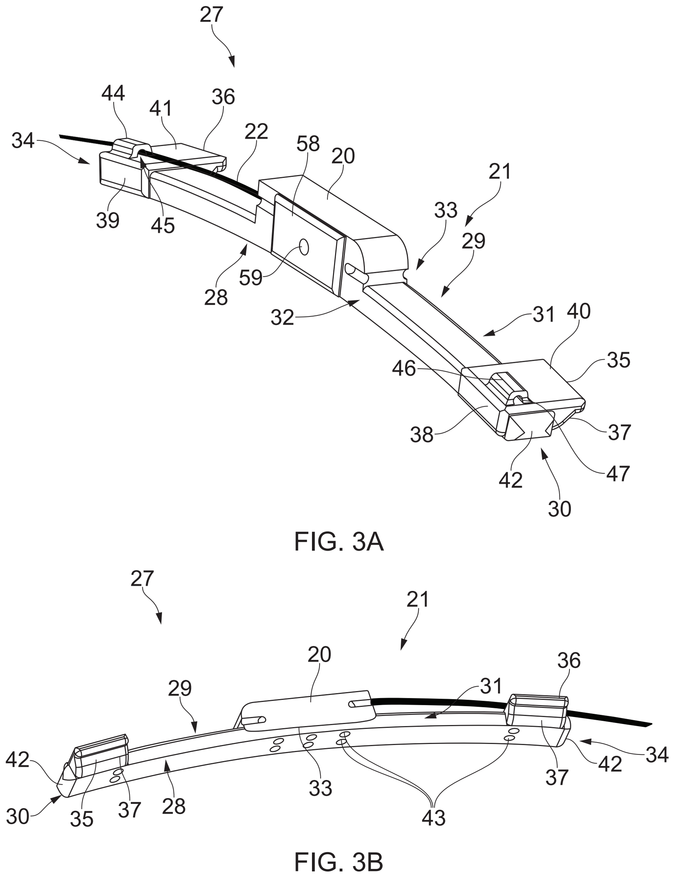

The probe 20 is connected to the guide line 19 indirectly by a probe guide 21. That is, the probe 20 is mounted to the probe guide 21 which is in turn attached to the guide line 19. The probe guide 21, like the borescope guide 18, aids in manoeuvring the probe 20 around the component 10. An exemplary probe guide 21 is illustrated in FIG. 3A and FIG. 3B and is described further below in relation to those figures.

As is apparent from **FIG. 1F****,** the probe guide 21 (with the probe 20) is then guided in a circumferential direction through the annular space 13 and around the component 10. This is performed by withdrawing (i.e. by pulling) the guide line 19 through the opening 15. In this way, the probe 20 can be used to inspect the component 10 (in the illustrated example, the probe can inspect the liner of the high pressure compressor). The prior accurate placement of the guide line 19 ensures that the probe 20 can be moved in a controlled manner along a desired path around the component 10. Moreover, pulling (rather than pushing) of the probe 20 can also provide a more controlled movement of the probe 20 around the component 10.

In some examples, the probe 20 may be an ultrasound probe. In such examples, a gel (to facilitate transmission of ultrasonic signals) may be applied to the probe 20 and/or probe guide 21 prior to the probe 20 being inserted into the annular space 13. The gel may be applied to a surface of the probe 20 or probe guide 21 in contact with the casing 14 during inspection.

The nature of the movement of the probe 20 around the component 10 may depend on the type of inspection being performed. For example, the movement of the probe 20 may be intermittent. That is, the probe 20 may be moved, and then held at, a plurality of discrete inspection locations spaced around the circumference of the component 10 so that the probe 20 can be used to perform an inspection at each of the plurality of inspection locations. Alternatively, the probe 20 may be moved in a continuous manner (e.g. at a constant speed) around the component 10. In some cases, the probe 20 may be required to retreat by a small distance (e.g. for adjustment of the location of the probe 20). This may be achieved by pulling the probe cable 22.

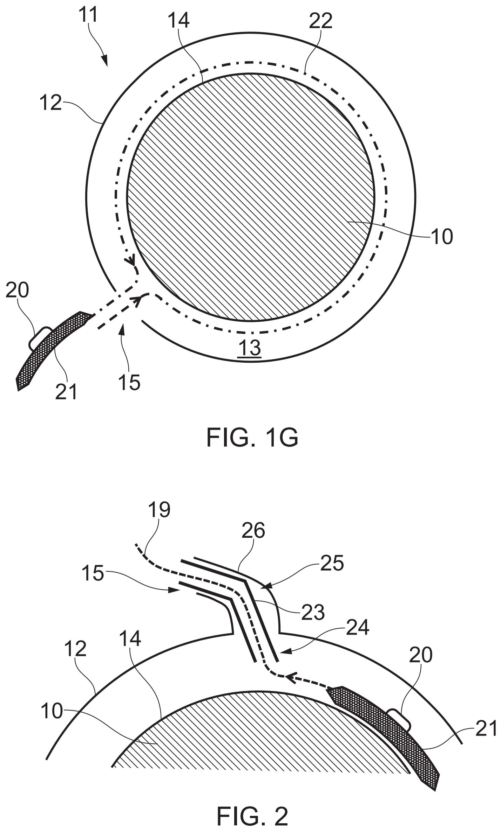

As per **FIG. 1G****,** the probe guide 21 (and thus the probe 20) is moved completely (or almost completely) around the component 10 such that the probe cable 22 completely (or almost completely) encircles the component 10. The probe guide 21 and probe 20 can then be removed from the annular space 13 through the opening 15 and the guide line 19 is disconnected from the probe guide 21. To ensure that the probe 20 is able to transmit data along the probe cable 22 for the entirety of its passage around the component 10, the length of the probe cable 22 must be greater than the circumference of the component 10. In the case of a compressor of an aircraft gas turbine engine, the probe cable 22 may for example be at least 2.5 m long.

Although not illustrated, the probe cable 22 can be removed from the annular space 13 either by pulling the probe cable 22 through the opening 15 in the same direction as the travel of the probe 20 around the component 10 during inspection, or by withdrawing the probe cable 22 (and optionally the probe 20 and the probe guide 21) back through the annular space 13 in the opposite direction.

Once the probe 20, probe guide 21 and probe cable 22 are removed from the annular space 13, the opening 15 may be closed (e.g. by replacement of the IP bleed check valve) and the C-duct pivot door may be shut to complete the inspection.

In the example above (illustrated in FIG. 1A to 1G), a guide line 19 is used to pull the probe 20 around the component 10. In another example, the borescope cable 17 may instead be used to pull the probe 20 around the component (i.e. the borescope cable 17 may provide the guide line). For example, rather than pulling the guide line 19 around the component 10, the probe 20 (optionally mounted to the probe guide 21) may be connected to the borescope cable 17 (e.g. via mounting to the borescope 16 or borescope guide 18) and may be drawn around the component 10 by the borescope cable 17. In this respect, the guide line 19 may be omitted from the method altogether.

**FIG. 2** schematically illustrates a variation of the above described method, which can aid in ensuring that the probe guide 21 (or the borescope guide 18) remains on or proximate to the casing 14 of the component 10 as the probe guide 21 is pulled towards and approaches the opening 15. As may be appreciated, because the opening 15 may be spaced from the casing 14, and because the probe guide 21 is moved by pulling on the guide line 19 extending through the opening 15, there is a propensity for the guide line 19 to lift the probe guide 21 away from the casing 14 of the component 10 as the probe guide 21 approaches the opening 15. This can interfere with inspection and/or can cause the probe guide 21 to be stuck (for example, the probe guide 21 can be trapped between structures present in the annular space 13).

To address this issue, a tube 23 is positioned through the opening 15 such that a distal end 24 of the tube 23 locates close to the casing 14 of the component 10. The guide line 19 passes through the interior of the tube 23, such that as the guide line 19 is drawn into the tube 23, the guide line 19 is held against (or at least close to) the casing 14. This ensures that the probe guide 21 is drawn along the casing 14 as it approaches the tube 23 (rather than being lifted away from the casing 14).

In the example illustrated in FIG. 2, a non-linear passage 25 (defined by an elbow 26) is provided between the opening 15 and the annular space 13. To aid insertion of the tube 23 into the annular space 13, the tube 23 is flexible. This allows tube 23 to follow the curvature of the non-linear passage 25.

**FIG. 3A** and **FIG. 3B** depict a probe assembly 27 that includes guide in the form of an elongate probe guide 21 and a probe 20 (which is an ultrasound probe). The probe guide 21 may be used in the method described above with respect to FIG. 1A to FIG. 1G. The probe guide 21 includes an underside 28 that faces radially inward in use, and an upper side 29 that is opposite the underside 28 (and which faces radially outwardly in use). The probe guide 21 also includes opposite leading 30 and trailing 34 ends that are spaced apart in the in-use circumferential direction (and which lead and trail in movement in use), and first 31 and second 32 lateral sides that face axially in use (for example, along rotational axis of the component 10 when used in the method of FIG. 1A to FIG. 1G).

The underside 28 is elongate and concave (and in the illustrated example is smooth) which allows the underside 28 to slide over the circumferential outer surface of a component in use.

Although not illustrated in the present example, the underside 28 may comprise one or more recesses or channels formed therein (e.g. of less than 1.0 mm in depth), which may provide space for gel to be provided between the underside 28 and the component. Such gel may, for example, facilitate transmission of ultrasonic signals.

The probe guide 21 also comprises a mounting portion 33 at which the probe 20 is mounted. In particular, the probe 20 is provided at the upper side 29 of the probe guide 21. However, the mounting of the probe 20 is such that the probe 20 is able to inspect a component upon which the underside 28 of the probe guide 21 is placed.

To facilitate such inspection, the probe guide 21 includes a plurality of magnetic elements, in the form of permanent magnets 43 (shown in FIG 3B) that are embedded into the underside 28 of the probe guide 21. The permanent magnets 43 are configured (collectively) to ensure that the probe guide 21 is able to slide over the outer circumferential surface of a component while being retained on the surface. This allows the probe guide 21 to be pulled around the component (to perform an inspection) without being dislodged from the component.

The first lateral side 31 of the probe guide 21 includes first 35 and second 36 lateral protrusions, each of which protrudes laterally from the first lateral side 31. The first 35 and second 36 lateral protrusions are spaced from one another along the probe guide 21 such that the first lateral protrusion 35 is located at the leading end 30 and the second lateral protrusion 36 is located at the trailing end 34.

Each lateral protrusion 35, 36 is wedge shaped, so as to have a lower sloped surface 37, which slopes upwardly from the underside 28 of the probe guide 21. This sloped surface 37 is intended to be in contact with (and to slide across) the outer surface of a component in use. Accordingly, each sloped surface 37 is complementary in shape with a corresponding outer surface of the component that is intended to be inspected by the probe assembly 27.

Third 38 and fourth 39 lateral protrusions protrude from the second lateral side 32 of the probe guide 21 at the leading 30 and trailing 34 ends, so as to be directly opposite the first 35 and second 36 lateral protrusions. In this way, the first 35 and third 38 lateral protrusions form a first enlarged portion 40 of the probe guide 21 and the second 36 and fourth 39 protrusions form a second enlarged portion 41 of the probe guide 21.

Each of the first 40 and second 41 enlarged portions of the probe guide 21 has a cross-sectional shape that is complementary to a space in which the probe guide 21 is intended to be positioned in use. In particular, the illustrated probe guide 21 is intended for positioning in a circumferentially-extending recess defined between spaced radially-extending flanges of a compressor casing. By providing portions (i.e. the enlarged portions 40, 41) of the probe guide 21 that fit snugly within such a recess, movement of the probe guide 21 may be restricted to circumferential movement around the component. In other words, undesirable movement (which may have an effect on the accuracy of any inspection) may be reduced.

A fifth lateral protrusion 58 is provided on the second lateral side 32 of the probe guide 21, adjacent to the probe 20 (i.e. centrally along a length of the probe guide 21). Again, this helps to restrict movement of the probe guide 21 away from a desired path around the component. A further magnet 59 is embedded in the fifth lateral protrusion 58 to help retain the probe guide 21 against a radially-extending flange of the compressor casing in use.

To further aid movement in the circumferential direction, each of the leading 30 and trailing 34 ends of the probe guide 21 is provided with a tapered nose portion 42. This tapered nose portion 42 helps the probe guide 21 to move past any obstruction in its path.

The probe guide 21 is also provided with a cable retaining portion 44 for retaining a probe cable 22 of the probe 20. The cable retaining portion 44 is at the trailing end 34 of the probe guide 21, so as to be spaced along the probe guide 21 from the mounting portion 33. A hole 45 extends through the cable retaining portion 44 in a direction that, in use, is parallel to the circumferential direction (i.e. in which the probe guide is intended to move in use). The cable retaining portion 44 helps to ensure that the probe cable 22 extends in the circumferential direction in use. Moreover, if the probe cable 22 is pulled in use (for example to adjust the position of the probe guide 21), the cable retaining portion 44 may help to ensure that the pulling force is directed in circumferential direction to move the probe guide 21 circumferentially (rather than acting in a direction away from the component so as to cause the probe guide 21 to lift away from the component). Likewise, the cable retaining portion 44 can help to ensure that the cable 22 is unable to fall to the side of the probe guide 21 (which could cause the probe guide 21 to be pulled axially and/or result in the cable 22 being caught under the probe guide 21 in use).

At the opposite leading end 30, the probe guide 21 is provided with a guide line retaining portion 46 for retaining the guide line proximate to the probe guide 21 . Although not illustrated, a guide line can be attached directly to the probe 20, so as to extend from the probe 20 and through a circumferentially extending hole 47 formed in the guide line retaining portion 46. The guide line retaining portion 46, thus acts in a similar manner to the cable retaining portion 44; it reduces the possibility of the guide line falling to the side of the probe guide 21 and also helps to direct the pulling force of the guide line when pulled.

**FIG. 4A, FIG.4B** and **FIG. 4C** illustrate a guide in the form of a borescope guide 18, which is for mounting of the head of a borescope, as is described above in relation to FIG. 1B. As may be appreciated the borescope guide 18 may be used in the method show in FIG. 1A to FIG. 1G. The borescope guide 18 has similarities with the probe guide 21 of FIG. 3A and FIG. 3B, and for that reason the same reference numerals have been used for similar features.

The borescope guide 18 comprises an underside 28 that faces radially inward in use, and an upper side 29 that is opposite the underside 28 (and which faces radially outwardly in use). The borescope guide 18 also includes opposite leading 30 and trailing 34 ends that are spaced apart in the in-use circumferential direction (and which lead and trail in movement in use when the borescope guide 18 is pulled around the component). Also present are first 31 and second 32 lateral sides that face axially in use (for example, along rotational axis of the component 10 when used in the method of FIG. 1A to FIG. 1G). The underside 28 of the borescope guide 18 is concave which allows the borescope guide 18 to slide over the circumferential outer surface of a component in use.

The borescope guide 18 further comprises a plurality of lateral protrusions 35 (only two of which are labelled for clarity) that protrude laterally from the first lateral side 31 of the borescope guide 18 (in other examples, lateral protrusions may protrude additionally or alternatively from the second lateral side 32). The lateral protrusions 35 are spaced along the borescope guide 18, such that bolt-accommodating recesses 49 are defined between pairs of adjacent lateral protrusions 35. As will be explained in more detail further below, these recesses 49 aid in placement of the borescope guide 18 onto the surface of the component.

Each lateral protrusion 35 has a tapered (tooth-like) shape with a lower sloped surface 37 that is convex and that slopes upwardly from the underside 28 of the borescope guide 18. Each lateral protrusion 35 also comprises an upper concave surface 51 opposite the sloped surface 37.

A mounting portion in the form of a cylindrical borescope-receiving cavity 33 extends through the borescope guide 18 in a length direction of the borescope guide 18 (i.e. an in-use circumferential direction) between the leading 30 and trailing 34 ends of the borescope guide 18. In use, a borescope can be inserted into the borescope-receiving cavity 33 (through an open end of borescope-receiving cavity 33 at the leading end 30 of the borescope guide 18). So as not to obstruct a view of the borescope, the borescope guide 18 includes an aperture 53 formed at the trailing end 34 of the borescope guide 18. This aperture 53 is narrower (i.e. smaller in cross-sectional area) than the borescope-receiving cavity 33 to prevent a borescope mounted in the borescope-receiving cavity 33 from being pushed out of the borescope guide 18. For example, the borescope-receiving cavity may be cylindrical and have a diameter of about 6 mm, and the aperture 53 may have a diameter of less than 6 mm (e.g. less than 5 mm).

A borescope received in the borescope-receiving cavity 33 can be retained from being pulled out of the borescope-receiving cavity 33 by receipt of a retaining member (e.g. string, cable, etc.) passed through a borescope retention hole 52 located at the leading end 30 of the borescope guide 18.

To help with insertion of a borescope (and to allow a user to ensure that correct mounting has been achieved), the borescope guide 18 further comprises two rectangular openings 54 formed in the upper side 29 of the borescope guide 18. The openings 54 open to the borescope-receiving cavity 33.

FIG. 4C shows a cross-section through the borescope guide 18, in use, positioned on a component 10 (which in this case is a compressor). The component 10 includes first 55 and second 56 radially extending flanges that are spaced apart in an axial direction (parallel to a rotational axis of the component 10) so as to define a recess 57 therebetween. As may be appreciated, this is the same recess 57 in which the probe guide 21 may be received for passage of the probe 20 around the component 10.

As should be apparent from the figure, the borescope guide 18 is shaped so as to fit closely (or snugly) within the recess 57. For example, the borescope guide 18 extends across the full width of the recess 57, such that the lateral protrusions 35 contact the first flange 55 and the second lateral side 32 of the borescope guide 18 contacts the second flange 56. This helps to restrict movement of the borescope guide 18 away from the desired (circumferential) travel path around the component 10.

Fasteners 50 in the form of bolts extend through the first flange 55. The upper concave surface 51 ensures that the borescope guide 18 is able to slide underneath the fasteners 50 when moved around the component 10. Although not immediately apparent from FIG. 4B, a plurality of fasteners 50 are spaced circumferentially along the first flange 55. The recesses 49 allow for passage of these fasteners 50 past the lateral protrusions 35 as the borescope guide 18 is inserted into the recess 57. Likewise, the lateral protrusions 35 can help to retain the borescope guide 18 in the recess 57 in use. For example, if the borescope guide 18 is inadvertently lifted away from the component 10, the lateral protrusions 35 may contact the fasteners 50 to retain the borescope guide 18 in the recess 57.

On the opposite side of the borescope guide 18, the second lateral side 32 extends for the full height of the second flange 56 (although in other examples this may not be the case). This aids in restricting rotation of the borescope guide 18 about a rotational axis extending in the length direction of the borescope guide 18 (i.e. into the page in FIG. 4B).

To further retain the borescope guide 18 in the recess 57, a plurality of permanent magnets 43 are embedded in the underside 28 of the borescope guide 18.

In general, the probe guide 21 and borescope guide 18 can respectively aid in controlled movement of a probe and borescope around the circumference of a component such as a compressor. Each of these guides 18, 21 include features that control yaw movement (rotation about a radial axis of the component), roll movement (rotation about a centreline along the length of the guide 18, 21), pitch movement (causing lifting off of one end of the guide 18, 21), slide movement (lateral displacement of the guide 18, 21 from the desired path), and lift-off (lifting off of both ends of the guide 18, 21).

For example, yaw movement may be limited by the elongate curved concave underside of each guide 18, 21. Yaw movement is also limited by the close fit of each guide 18, 21 within a recess (which is at least partly provided by the lateral protrusions 35, 36, 38, 39 that effectively wedge the guides 18, 21 into the recess 57). Roll movement may be limited by the abovementioned wedging provided by the lateral protrusions 35 36, 38, 39, the elongate curved concave underside 28, and the permanent magnets 43. Pitch movement, and lift-off more generally, can similarly be limited by the permanent magnets 43 and the elongate curved concave underside 28. In some circumstances, pitching and lift-off of the guides 18, 21 may also be restricted by contact between the lateral protrusions 35, 36 and fasteners 50 of the component. Slide movement may be limited by the wedging provided by the lateral protrusions 35, 36, 38, 39.

This can help to reduce movement of the probe guide 21 away from a desired path. In particular, rotation of the probe guide 21 about a radial axis of the component may be restricted (this may be considered a yaw movement of the probe guide 21).

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A method of inspecting a component (10) of a gas turbine engine (11) for an aircraft, in which a housing (12) circumferentially surrounds the component (10) so as to define an annular space (13) between the housing (12) and the component (10), the method comprising:
guiding a guide line (19) into the annular space (13) through an opening (15) to the annular space (13) and around the component (10) in a circumferential direction; and
withdrawing the guide line (19) through the opening (15), such withdrawal moving a probe (20) that is connected to the guide line (19) in a circumferential direction around the component (10) for performing an inspection of the component (10).

2. The method according to claim 1, comprising moving a borescope (16) into the annular space (13) through the opening (15) and around the component (10) in a first circumferential direction.

3. The method according to claim 2, comprising moving the borescope (16) in a second circumferential direction, opposite to the first circumferential direction, to guide a pull line, connected to the borescope (16), around the component (10); wherein the borescope (16) is moved in the second circumferential direction by pulling a borescope cable (17) of the borescope (16) through the opening (15).

4. The method according to claim 3, wherein the pull line is the guide line (19).

5. The method according to claim 2, wherein the guide line (19) is a borescope cable (17) of the borescope (16), which is guided into the annular space (13) through the opening (15) and around the component (10) by the movement of the borescope (16) into the annular space (13) through the opening (15) and around the component (10).

6. The method according to any one of claims 2 to 5, wherein the borescope (16) is mounted to a borescope guide (18) subsequent to moving the borescope (16) around the component (10) in the first circumferential direction, wherein the borescope guide (18) comprises one or more magnetic elements for retaining the borescope guide (18) to the component (10).

7. The method according to any one of the preceding claims, comprising connecting the probe (20) to the guide line (19) subsequent to guiding the guide line (19) around the component (10).

8. The method according to any one of the preceding claims, comprising positioning a line directing member through the opening (15) so as to extend at least partway across the annular space (13) towards the component (10), and wherein the guide line (19) passes over a distal end of the line directing member, distal from the opening (15), when the guide line (19) is withdrawn through the opening (15).

9. The method according to claim 8, wherein the line directing member is a flexible tube.

10. The method according to any one of the preceding claims, wherein the component (10) is a compressor of the gas turbine engine.

11. The method according to any one of the preceding claims, wherein the probe (20) is an ultrasonic probe, and wherein performing the inspection comprises performing an ultrasonic inspection of the component (10).

12. A guide (18, 21) for guiding an inspection device around an outer circumferential surface of a component of a gas turbine engine, the guide (18, 21) comprising a mounting portion (33) for mounting the inspection device to the guide, and one or more magnetic elements for retaining the guide (18, 21) on the outer circumferential surface in use.

13. A guide (18, 21) according to claim 12, comprising a concave underside to slide across the outer circumferential surface of the component.

14. A guide (18, 21) according to claim 12 or 13, comprising a lateral protrusion that protrudes laterally from a first lateral side of the guide.

15. A guide (18, 21) according to any one of claims 12 to 14, wherein the inspection device is a borescope (16) or an ultrasonic probe (20).
